# EUROPÄISCHE PATENTSCHRIFT

(11) **EP 1 923 167 B1**
(45) Veröffentlichungstag und Bekanntmachung des Hinweises auf die Patenterteilung: **02.07.2008**
(21) Anmeldenummer: 06023969.6
(22) Anmeldetag: 18.11.2006
(51) Int. Cl.: B23Q 1/52, B23Q 5/58

(54) **Schwenkbarer Werkstücktisch für Bearbeitungsmaschinen mit einer Steuervorrichtung zur Steuerung und Überwachung seiner Spannvorrichtung**
Pivotable worktable for machine tools with a control device for controlling and monitoring of its clamping device
Table pivotante pour machines d'usinage avec un dispositif de commande et de surveillance de son dispositif de fixation

(43) Veröffentlichungstag der Anmeldung: 21.05.2008
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Marquart, Hans-Peter, Dipl.-Ing. (FH), 78559 Gosheim (DE)
(74) Vertreter: Vetter, Hans

(56) Entgegenhaltungen:
- EP-A1- 1 262 275
- EP-A2- 0 712 682
- EP-A2- 0 812 653
- US-A1- 4 712 282

## Beschreibung

Die Erfindung betrifft einen schwenkbaren Werkstücktisch für Bearbeitungsmaschinen, mit einer wenigstens ein fluidisches Spannelement aufweisenden Spannvorrichtung zum lösbaren Fixieren von Werkstücken und/oder Werkstückpaletten auf dem Werkstücktisch und mit einer elektronischen Steuervorrichtung zur Steuerung und Überwachung der Spannvorrichtung.

Derartige mit Spannvorrichtungen versehene schwenkbare Werkstücktische sind bei modernen Bearbeitungsmaschinen weit verbreitet. Die üblicherweise hydraulisch oder pneumatisch betätigten Spannvorrichtungen werden elektronisch angesteuert, um das jeweilige Werkstück am Werkstücktisch oder eine Werkstückpalette am Werkstücktisch oder ein Werkstück auf einer Werkstückpalette zu arretieren.

Elektrische, fluidische oder mechanische Fehlfunktionen oder Defekte können insbesondere bei großen und schweren Bearbeitungsmaschinen zur Bearbeitung sehr großer Werkstücke zu Gefahrensituationen führen. Löst sich beispielsweise infolge eines solchen Fehlers oder Defekts ein Werkstück bei nach oben geschwenktem Werkstücktisch und stürzt unkontrolliert herab, so können erhebliche Personen- und Sachschäden die Folge sein. Derartige Werkstücke können zum Teil eine Masse von bis zu 1.000 kg oder darüber haben.

Die Spannvorrichtung und deren Steuervorrichtung bedürfen daher einer ständigen Überwachung vor allem in den Fällen, wo durch Fehler im Steuersystem unkontrollierte Bewegungen eines Werkstücks oder einer Werkstückpalette die Folge sein können. Fehlfunktionen oder Defekte in der Steuerung müssen sofort erkannt werden, wobei nach dem Stand der aktuellen Sicherheitstechnik ein solches System mindestens einfehlersicher beziehungsweise erstfehlersicher aufgebaut sein muss. Dies heißt, ein möglicher Erstfehler darf zu keiner gefährlichen Situation führen, und der Erstfehler muss in einem vertretbaren Zeitintervall zwangsläufig aufgedeckt werden. Diese Forderungen sind beispielsweise in der Sicherheitsnorm DIN EN 954-1 und in der einschlägigen Sicherheitsproduktnorm DIN EN 12417 festgeschrieben.

Beispielsweise können folgende Fehler in einem solchen System auftreten:
a) Hängenbleiben von elektromechanischen Schaltkontakten, wie Schütze, Relais usw.
b) Unterbrechung von Sensor- und Aktoranschlussleitungen, zum Beispiel Kurzschluss, Querschluss, Erdschluss usw.
c) Kurzschluss oder Leitungsbruch in Magnetventilspulen
d) Unerkannte Hardwarefehler in der elektronischen Steuerung, die wegen der Komplexität der Elektronik (zum Beispiel mehrere Mikroprozessoren, Speicherbausteine und dergleichen) nicht entdeckt werden können.
e) Unerkannte Fehler in gespeicherten Softwareprogrammen, die wegen der Komplexität des Programms nicht entdeckt werden können.
f) Hängenbleiben von hydraulischen oder pneumatischen Stellventilen.

Eine Aufgabe der vorliegenden Erfindung besteht darin, einen schwenkbaren Werkstücktisch mit einer Spannvorrichtung der eingangs genannten Gattung so auszugestalten, dass mit größtmöglicher Sicherheit ein unbeabsichtigtes Lösen eines Werkstücks oder einer Werkstückpalette verhindert wird.

Diese Aufgabe wird erfindungsgemäß durch einen schwenkbaren Werkstücktisch mit den Merkmalen des Anspruchs 1 gelöst.

Die erfindungsgemäße Vorrichtung verhindert in vorteilhafter Weise mit sehr großer Sicherheit eine unkontrollierte Bewegung der fluidischen Spannelemente der Spannvorrichtung, sodass ein unabsichtliches Lösen von Werkstücken oder Werkstückpaletten auch bei den unterschiedlichsten Defekten und auftretenden Fehlern zuverlässig verhindert wird. Die Ansteuerung der sicherheitsrelevanten fluidischen Spannelemente erfolgt redundant durch zwei voneinander unabhängige Controller, wobei die Schwenkposition des Werkstücktisches ebenfalls redundant beiden Controllern mitgeteilt wird, das heißt, die Ausgangssignale von insbesondere nur einem Positionsgeber werden an zwei voneinander unabhängige elektronische Steuerungen geleitet. Ein Fehler in der Signalabfrage kann durch Datenvergleich zwischen den beiden Controllern erkannt werden. Dasselbe trifft für die Ermittlung der Steuersignale durch die beiden Controller zu.

Durch die in den Unteransprüchen aufgeführten Maßnahmen sind vorteilhafte Weiterbildungen und Verbesserungen des im Anspruch 1 angegebenen Werkstücktisches möglich.

Die Positionsmesseinrichtung ist bevorzugt eine Schwenkwinkel-Messeinrichtung, die mindestens einen Sensor aufweist.

Die Controller sind ausgangsseitig in vorteilhafter Weise mit einer die Sicherheitseinrichtung bildenden oder enthaltenden Ventilanordnung zur Steuerung der Fluidbeaufschlagung der Spannvorrichtung verbunden, wobei die Ventilanordnung wenigstens ein als Magnetventil ausgebildetes Ventil aufweist. Die Ventilanordnung wird somit redundant angesteuert.

In einer ersten vorteilhaften Ausgestaltungsvariante der Erfindung ist das wenigstens eine fluidische Spannelement der Spannvorrichtung als doppelwirkender Spannzylinder mit zwei Fluidkammern ausgebildet, wobei ein durch einen ersten der Controller steuerbares erstes Ventil der Ventilanordnung zur Druckbeaufschlagung und Druckentladung jeweils der einen Fluidkammer und ein durch einen zweiten der Controller steuerbares zweites Ventil der Ventilanordnung zur Druckbeaufschlagung und Druckentladung jeweils der anderen Fluidkammer vorgesehen ist und wobei durch die Ventile nur bei korrekten Steuersignalen der Controller jeweils die eine Fluidkammer druckbeaufschlagt und die andere gleichzeitig druckentladen ist. Auch die Ventilsteuerung der Spannvorrichtung ist somit redundant aufgebaut, und es besteht eine hohe Fehlersicherheit zur Verhinderung eines unbeabsichtigten Lösens eines Werkstücks oder einer Werkstückpalette.

Die Spann-Steuersignale, bei denen durch Druckbeaufschlagung der jeweils zweiten Fluidkammer durch das zweite Ventil der Spannzustand vorliegt oder hervorgerufen wird, sind Null-Signale, durch die sich die Ventile im stromlosen Schaltzustand befinden. Es liegt somit ein sogenanntes nullaktives Spannen vor, das heißt, bei Stromausfall oder Leitungsunterbrechung bleibt die Spannvorrichtung gespannt.

In vorteilhafter Weise ist ein steuerbares Rückschlagventil in einer Zuleitung zu jeweils der zweiten Ventilkammer angeordnet, das bei Druckbeaufschlagung der anderen Ventilkammer öffnet. Hierdurch wird erreicht, dass bei einer Undichtigkeit, einem Ventildefekt oder einem Leitungsbruch der Druck in dieser zweiten Ventilkammer und damit der Spannzustand aufrechterhalten bleibt.

In einer zweiten vorteilhaften Ausführungsvariante ist das wenigstens eine fluidische Spannelement als einfachwirkender Spannzylinder mit mechanischen Rückstellmitteln ausgebildet, insbesondere mechanischen Federn, wobei ein Ventil der Ventilanordnung zur Druckbeaufschlagung und Druckentladung der gegen die Rückstellmittel wirkenden Fluidkammer des wenigstens einen Spannzylinders ausgebildet ist und wobei bei diesem Ventil nur bei korrekt anliegenden Steuersignalen beider Controller der zur Druckbeaufschlagung der Fluidkammer erforderliche Schaltzustand vorliegt. Auch bei dieser Ausführungsvariante ist ein nullaktives Spannen gegeben, da bei einem fehlerhaften Stromausfall oder fehlerhaftem Ausgangssignal eines Controllers oder Leitungsbruch der Spannzustand durch die mechanischen Rückstellmittel erhalten bleibt.

Die zur Druckbeaufschlagung der Fluidkammern und dadurch zum Lösen der Spannvorrichtung erforderlichen, am Ventil anliegenden Steuersignale der beiden Controller müssen die zur Erregung des Magnetteils des Ventils erforderlichen Signalwerte aufweisen, um dieses Lösen der Spannvorrichtung zu bewirken.

Ein Fehler nur eines dieser Steuersignale verhindert somit ein Lösen der Spannvorrichtung.

Zur weiteren Erhöhung der Sicherheit ist wenigstens eine zu dem wenigstens einen Spannelemente führende Druckleitung mit einem Drucksensor verbunden, wobei wenigstens einer der Controller eine Drucküberwachungseinrichtung zur Überprüfung des Drucksignals dieses Drucksensors aufweist. Hierdurch kann beispielsweise generell ein zu niedriger Druck oder ein Bruch einer Fluidleitung erkannt werden. Zudem kann in vorteilhafter Weise der Schaltzustand des mit der jeweiligen Druckleitung verbundenen Ventils überwacht werden.

Ebenfalls zur Erhöhung der Sicherheit trägt eine Fehlererkennungseinrichtung in wenigstens einem der Controller bei, die mit Mitteln zum Datenvergleich zwischen den Controllern ausgestattet ist, wobei Steuermittel zur Abschaltung der Bearbeitungsmaschine und/oder zur Erzeugung von optischen und/oder akustischen Warnsignalen und/oder zur Verhinderung des Öffnens der Zugangstür zum Arbeitsraum der Maschine bei einer Fehlererkennung vorgesehen sind. Dabei liegen bevorzugt zur Ventilsteuerung jeweils erzeugte Steuersignale wenigstens eines der Controller am anderen Controller zur Überprüfung und Fehlererkennung an.

Eine weitere zusätzliche Maßnahme zur Erhöhung der Sicherheit besteht darin, dass die Steuervorrichtung Mittel zur Verhinderung einer Bewegung des Werkstücktisches aus der unteren im wesentlichen horizontalen Position bei gelöster Spannvorrichtung besitzt. Hierdurch wird verhindert, dass bei gelöster Spannvorrichtung und eventuell noch vorhandenem Werkstück der Werkstücktisch geschwenkt werden kann, wodurch das Werkstück unkontrolliert herabstürzen und Schäden verursachen könnte.

Zwei Ausführungsbeispiele der Erfindung sind in der Zeichnung dargestellt und in der nachfolgenden Beschreibung näher erläutert. Es zeigen:
- Figur 1: eine schematische Darstellung eines schwenkbaren Werkstücktisches mit einer Spannvorrichtung sowie eine Steuervorrichtung zur Steuerung der Spannvorrichtung,
- Figur 2: ein erstes Ausführungsbeispiel einer Ventilanordnung zur Steuerung des oder der fluidischen Spannelemente der Spannvorrichtung,
- Figur 3: eine elektronische Steuervorrichtung zur Steuerung der Ventilanordnung gemäß dem ersten Ausführungsbeispiel,
- Figur 4: ein zweites Ausführungsbeispiel einer Ventilanordnung zur Steuerung des oder der fluidischen Spannelemente der Spannvorrichtung und
- Figur 5: eine elektronische Steuerung zur Steuerung der Ventilanordnung gemäß dem zweiten Ausführungsbeispiel.

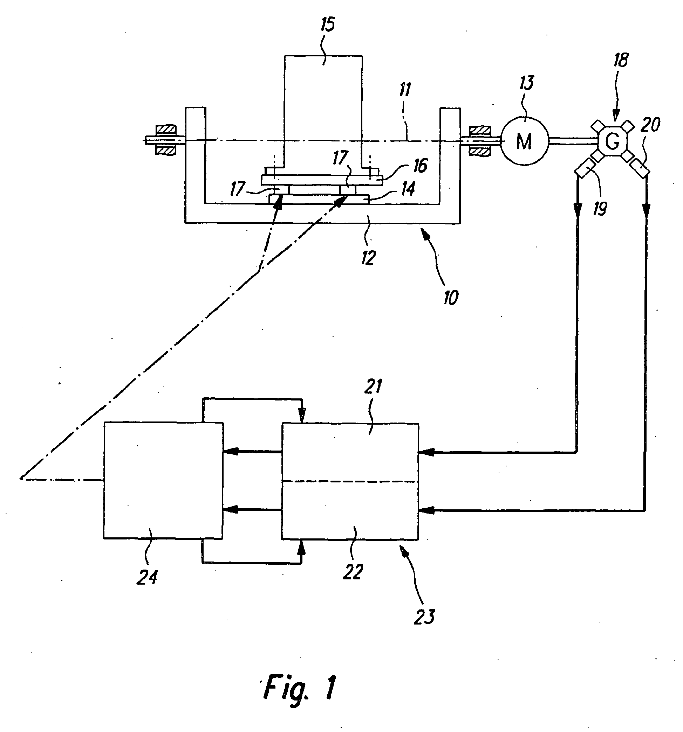

In Figur 1 ist schematisch ein als Schwenkrundtisch ausgebildeter schwenkbarer Werkstücktisch 10 dargestellt, wie er beispielsweise aus der EP-B-712682 oder der EP-B-712683 bekannt ist. Dieser Werkstücktisch 10 besitzt ein um eine Schwenkachse 11 schwenkbares wiegenartiges Schwenkteil 12, das beidseitig gelagert ist, wobei wenigstens ein Elektromotor 13 zum Schwenkantrieb dient. Auf dem Schwenkteil 12 ist ein um eine senkrecht zur Schwenkachse 11 liegende Schwenkachse drehbarer Rundtisch 14 angeordnet, der ebenfalls in nicht dargestellter Weise motorisch drehbar ist. Auf diesem Rundtisch 14 ist eine ein Werkstück 15 tragende Werkstückpalette 16 mittels einer fluidischen Spannvorrichtung 17 fixiert. Anstelle eines drehbaren Rundtisches 14 kann auch eine einfache, nicht drehbare Werkstückaufnahme treten. Mittels der fluidischen Spannvorrichtung 17 kann auch ein Werkstück direkt auf dem Rundtisch 14 fixiert werden, wobei auch alternativ oder zusätzlich eine entsprechende Spannvorrichtung 17 zwischen Werkstückpalette 16 und Werkstück 15 angeordnet sein kann.

Am Elektromotor 13 oder an einer von ihm angetriebenen Welle ist ein Positionsgeber 18 zur Erfassung der Winkelposition des Werkstücktisches 10 angeordnet. Dieser Positionsgeber 18 hat im Ausführungsbeispiel zwei separate Positionssensoren 19, 20, wobei im einfachsten Falle auch nur ein Positionssensor angeordnet sein kann. Weiterhin sind alternativ hierzu zwei separate Positionsgeber 18 möglich. Wesentlich dabei ist, dass zwei Sensorausgänge vorhanden sind, die mit zwei separaten Controllern 21, 22 einer elektronischen Maschinensteuerung 23 verbunden sind. Hierdurch erfolgt eine redundante zweikanalige Auswertung der Schwenkposition des Werkstücktisches 10.

Prinzipiell möglich ist selbstverständlich auch noch eine höherkanalige Auswertung mit drei oder mehr separaten Controllern, denen jeweils separat die Positionssignale eines oder mehrerer Positionsgeber zur Erfassung der Winkelposition des Werkstücktisches 10 zugeführt werden.

Neben der eigentlichen Steuerung der Bearbeitungsmaschine hat die elektronische Maschinensteuerung 23 die Aufgabe, die fluidische Spannvorrichtung 17 zu betätigen beziehungsweise zu steuern. Hierzu sind die Ausgänge der Controller 21, 22 über eine Ventilanordnung 24 mit der fluidischen Spannvorrichtung 17 verbunden, wobei die redundant angesteuerte Ventilanordnung 24 als Sicherheitseinrichtung ausgebildet ist, die ein Lösen der Spannvorrichtung 17 nur bei von beiden Controllern 21, 22 simultan erzeugten Löse-Steuersignalen gestattet. Dies wird im Zusammenhang mit den weiteren Figuren noch näher erläutert.

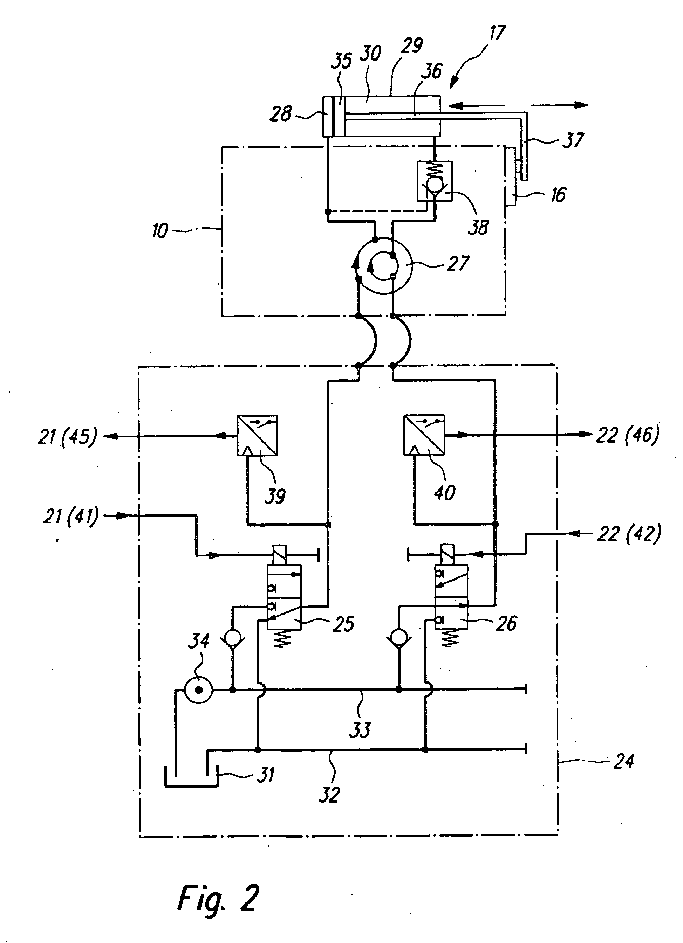

Gemäß der in Figur 2 detaillierter dargestellten Ventilanordnung 24 steuern die beiden Ausgänge der beiden Controller 21, 22 zwei fluidische Ventile 25, 26. Im unbetätigten Zustand werden die beiden Ventile 25, 26 durch Federkraft oder sonstige mechanische Mittel in der dargestellten Ventilposition gehalten. Das auf der linken Seite dargestellte Ventil 25 ist über eine Drehdurchführung 27 am Werkstücktisch 10, die beispielsweise im Bereich einer seiner beiden Lagerstellen und/oder am Rundtisch 14 angeordnet sein kann, mit der linken Zylinderkammer 28 eines doppelwirkenden Spannzylinders 29 der fluidischen Spannvorrichtung 17 verbunden, während das andere Ventil 26 ebenfalls über die Drehdurchführung 27 mit der rechten Zylinderkammer 30 dieses Spannzylinders 29 verbunden ist. Im dargestellten nicht erregten Zustand der beiden Ventile 25, 26 verbindet das linke Ventil 25 die linke Zylinderkammer 28 mit einer zu einem Fluidtank 31 führenden Druckentladungsleitung 32, während die rechte Zylinderkammer 30 über das rechte Ventil 26 mit einer Druckleitung 33 verbunden ist, die mittels einer am Fluidtank 31 angeschlossenen Pumpe 34 mit einem fluidischen Druck beaufschlagt ist, beispielsweise einem Pneumatikdruck oder Hydraulikdruck. In diesem Zustand wird ein Kolben 35 des Spannzylinders 29 in die dargestellte linke Position gepresst, wo er ein mit seiner Kolbenstange 36 verbundenes Spannteil 37 gegen die Werkstückpalette 16 presst und diese dadurch festspannt beziehungsweise fixiert.

An dieser Stelle sei festgestellt, dass zum Spannen der Werkstückpalette 16 oder eines Werkstücks 15 direkt am Werkstücktisch 10 oder an der Werkstückpalette 16 mindestens ein Spannzylinder vorgesehen ist, üblicherweise zwei bis sechs Spannzylinder, die fluidisch parallel geschaltet sind. Der einzige in Figur 2 dargestellte Spannzylinder 29 steht somit symbolisch auch für mehrere parallel geschaltete Spannzylinder.

Durch simultan erzeugte Löse-Steuersignale der beiden Controller 21, 22 werden die beiden Ventile 25, 26 umgesteuert, sodass nunmehr die linke Zylinderkammer 28 druckbeaufschlagt und die rechte Zylinderkammer 30 druckentlastet beziehungsweise druckentladen wird. Dies bewirkt ein Lösen der Spannvorrichtung 17 beziehungsweise seiner Spannzylinder 29. Dieses Lösen erfolgt somit nur dann, wenn beide Controller 21, 22 im wesentlichen gleichzeitig die korrekten Löse-Steuersignale erzeugen, sodass die Ventilanordnung 24 gleichzeitig als redundante Sicherheitseinrichtung wirkt beziehungsweise ausgebildet ist.

Zur Erhöhung der Sicherheit ist die rechte Zylinderkammer 30 über ein gesteuertes Rückschlagventil 38 mit dem auf der rechten Seite dargestellten zugeordneten Ventil 26 verbunden. Dieses Rückschlagventil 38 bewirkt bei einem Bruch oder einem Leck der fluidischen Leitung zum Ventil 26, dass der Druck in der rechten Zylinderkammer 30 aufrechterhalten bleibt. Erst beim Umsteuern der beiden Ventile wird das Rückschlagventil 38 durch den an der linken Zylinderkammer 28 anliegenden Druck ebenfalls umgesteuert, sodass der fluidische Druck in der rechten Zylinderkammer 30 über das Rückschlagventil 38 abgebaut werden kann.

Bei mehreren Spannzylindern 29 kann jeder mit einem eigenen Rückschlagventil 38 versehen sein oder die jeweils rechten Zylinderkammern 30 sind über ein einziges Rückschlagventil 38 mit dem zugeordneten Ventil 26 verbunden.

Als weitere Sicherheitsmaßnahme sind die von den Ventilen 25, 26 zum Spannzylinder 29 führenden Leitungen mit Drucksensoren 39, 40 verbunden, die im einfachsten Falle als Druckschalter ausgebildet sind. Diese Drucksensoren 39, 40 melden den jeweils an den Leitungen anliegenden Fluiddruck an die Controller 21, 22 zurück. Diese können dadurch erkennen, ob beispielsweise die Ventile 25 beziehungsweise 26 ihren korrekten Schaltzustand aufweisen und/oder ob die fluidischen Leitungen Lecks oder Leitungsbrüche aufweisen.

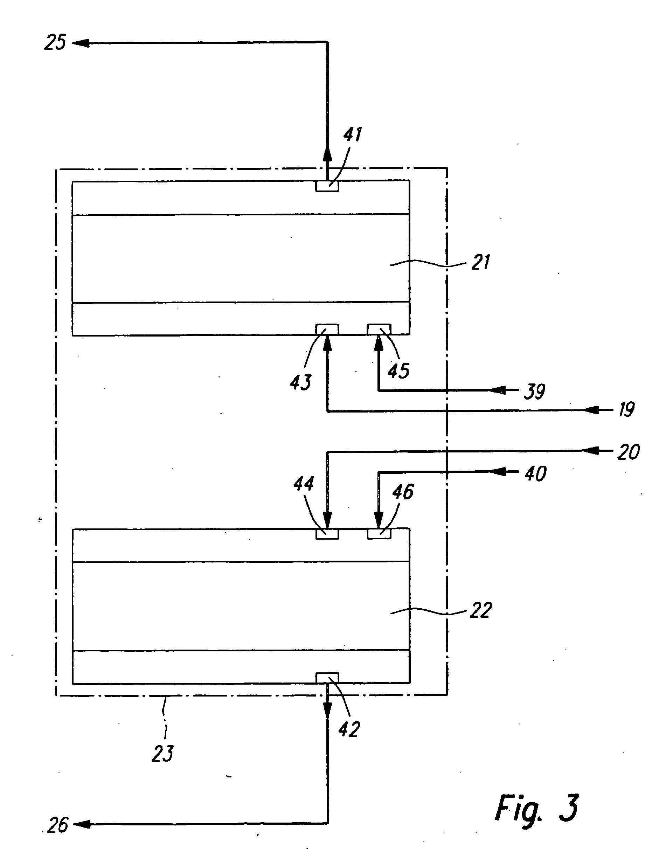

In Figur 3 ist die elektronische Maschinensteuerung 23 detaillierter dargestellt. Die beiden Controller 21, 22 besitzen Steuerausgänge 41, 42, die mit den Ventilen 25, 26 beziehungsweise deren Magnetteilen verbunden sind. Die beiden Positionssensoren 19, 20 sind an Sensoreingängen 43, 44 und die Drucksensoren 39, 40 an entsprechenden Sensoreingängen 45, 46 der beiden Controller 21, 22 angeschlossen.

Die beiden Controller 21, 22 enthalten weiterhin Sicherheitssteuerelemente beziehungsweise -programme, die ein Lösen der Spannvorrichtung 17 nur in der in Figur 1 eingezeichneten horizontalen Position des Werkstücktisches 10 innerhalb eines vorgebbaren Toleranzbereichs zulassen. Dieser Toleranzbereich kann beispielsweise bis zu +/- 5° betragen. Hierdurch wird zusätzlich ein unbeabsichtigtes oder durch Fehler verursachtes Lösen der Spannvorrichtung 17 in anderen Positionen verhindert, bei denen das Werkstück 15 beziehungsweise die Werkstückpalette 16, die oft eine sehr große Masse von einigen 100 Kg bis zu über 1000 kg aufweisen kann, unkontrolliert herabstürzt und erhebliche Personen- und Sachschäden verursachen könnte. Zusätzlich enthält die elektronische Maschinensteuerung 23 beziehungsweise deren Controller 21, 22 Steuereinrichtungen beziehungsweise Steuerprogramme, die ein Einschalten des Elektromotors 13 zum Herausfahren aus der horizontalen Position nur dann zulassen, wenn sich die Spannvorrichtung 17 im Spannzustand befindet, in dem das Werkstück 15 beziehungsweise die Werkstückpalette 16 am Werkstücktisch 10 fixiert ist.

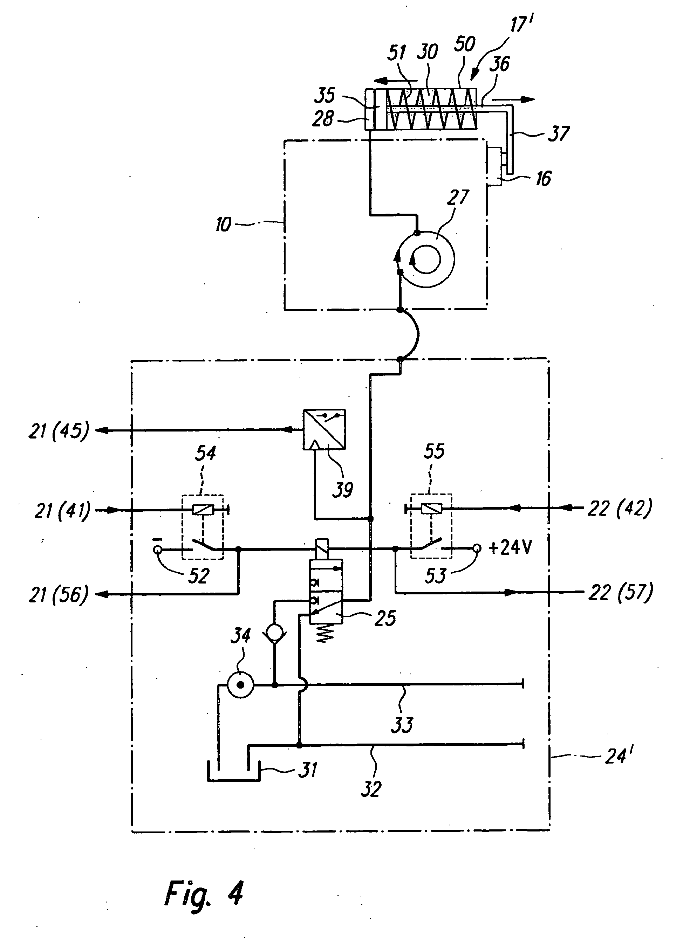

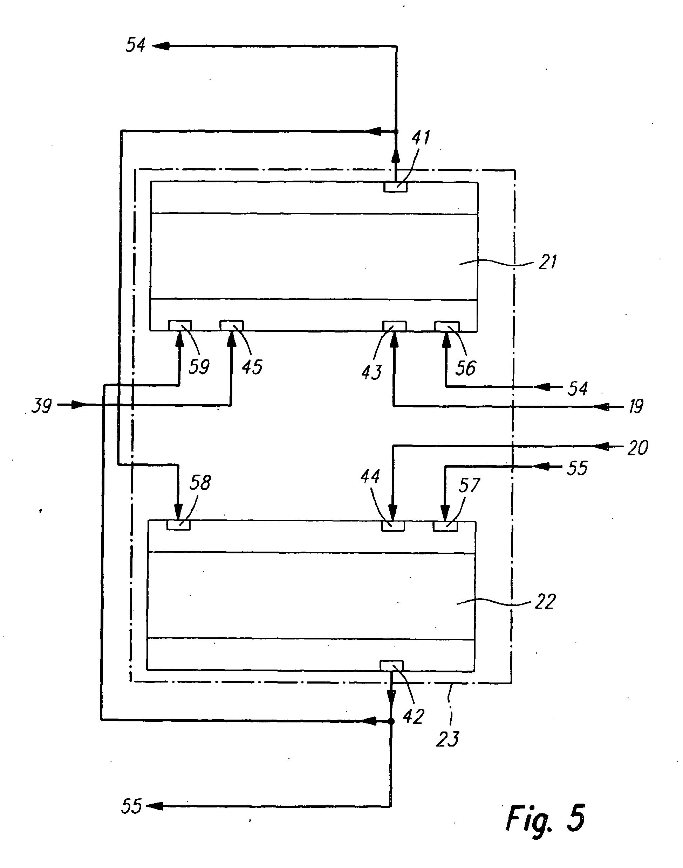

In den Figuren 4 und 5 ist ein zweites Ausführungsbeispiel der Erfindung dargestellt. Dabei entspricht Figur 4 im Wesentlichen der Figur 2 und Figur 5 im Wesentlichen der Figur 3. Gleiche oder gleich wirkende Bauteile und Baugruppen sind mit denselben Bezugszeichen versehen und nicht nochmals beschrieben.

Beim zweiten Ausführungsbeispiel entfällt das fluidische Ventil 26 und seine Verbindung zur rechten Zylinderkammer 30 eines einfachwirkenden Spannzylinders 50, der hier die fluidische Spannvorrichtung 17' bildet. Wie schon beim ersten Ausführungsbeispiel ist dieser eine Spannzylinder 50 nur symbolisch für einen oder mehrere parallel geschaltete Spannzylinder dargestellt. In der rechten Zylinderkammer 30 ist eine Druckfeder 51 angeordnet, die bei druckentlasteter linker Zylinderkammer 28 den Kolben 35 nach links und damit das Spannteil 37 gegen die Werkstückpalette 16 beziehungsweise ein Werkstück presst. Dies bedeutet, dass im nicht erregten Ruhezustand des Ventils 25, in dem die linke Zylinderkammer 28 druckentlastet ist, der Spannzustand der fluidischen Spannvorrichtung 17' hergestellt ist.

Zur Betätigung beziehungsweise Umsteuerung des Ventils 25 dient eine an zwei Anschlussklemmen 52, 53 angelegte Versorgungsspannung von beispielsweise 24 Volt. Die Höhe der Spannung hängt selbstverständlich vom jeweiligen Magnetteil des Ventils 25 ab. Diese Versorgungsspannung kann über zwei Schaltrelais 54, 55 an die beiden Anschlüsse des Magnetteils des Ventils 25 angelegt werden, wenn die beiden Schaltrelais 54, 55 beide gleichzeitig durch die Steuerausgänge 41, 42 der beiden Controller 21, 22 angesteuert werden. Durch das Erfordernis der im wesentlichen gleichzeitigen Ansteuerung ist hier wiederum ein redundantes Schalten beziehungsweise Steuern des Ventils 25 und damit der modifizierten Ventilanordnung 24' realisiert.

Die beiden am Magnetteil des Ventils 25 anliegenden Spannungen werden den beiden Controllern 21, 22 zur Überprüfung rückgemeldet. Entsprechende Verbindungsleitungen liegen an Messeingängen 56, 57 an. Neben der Überprüfung, ob am Ventil 25 die korrekten Spannungen anliegen, überprüfen die beiden Controller 21, 22 gegenseitig, ob korrekte Steuersignale an den Ausgängen 41, 42 anliegen. Hierzu ist der Steuerausgang 41 des Controllers 21 mit einem Prüfeingang 58 des Controllers 22 und der Steuerausgang 42 des Controllers 22 mit einem Prüfeingang 59 des Controllers 21 verbunden. Wenn bei der gegenseitigen Überprüfung oder bei der Überprüfung der am Ventil 25 anliegenden Spannungen oder bei der Überprüfung des durch den Drucksensor 39 gemessenen Drucks ein Fehler festgestellt wird, so erfolgt eine Abschaltung der Spannvorrichtung 17' beziehungsweise 17, was eine Beibehaltung des Spannzustands bewirkt. Zusätzlich kann die Bewegung des Elektromotors 13 blockiert oder sogar die gesamte Bearbeitungsmaschine abgeschaltet werden, bis der Fehler entdeckt wird. Die beschriebenen Überprüfungen sind optionale Einrichtungen.

Die Ausgänge und Eingänge der Ventilanordnung 24 in Figur 2 und der Ventilanordnung 24' in Figur 4 sind jeweils mit der Bezugsziffer des angeschlossenen Controllers 21 beziehungsweise 22 und dahinter in Klammern mit der Bezugsziffer des jeweiligen Eingangs oder Ausgangs dieser Controller bezeichnet.

Die elektronische Maschinensteuerung 23 besitzt noch zusätzlich Steuermittel und/oder ein Steuerprogramm zur Verhinderung einer Schwenkbewegung durch den Elektromotor 13 aus der unteren horizontalen Position des Werkstücktisches 10 heraus, wenn die Spannvorrichtung 17 beziehungsweise 17' sich nicht im festgespannten Zustand befindet. Diese Funktion kann einer der beiden Controller 21, 22 oder beide Controller redundant erfüllen.

## Patentansprüche

1. Schwenkbarer Werkstücktisch für Bearbeitungsmaschinen, mit einer wenigstens ein fluidisches Spannelement (29; 50) aufweisenden Spannvorrichtung (17; 17') zum lösbaren Fixieren von Werkstücken (15) und/oder Werkstückpaletten (16) auf dem Werkstücktisch (10) und mit einer elektronischen Steuervorrichtung (23) zur Steuerung und Überwachung der Spannvorrichtung (17; 17'), **dadurch gekennzeichnet, dass** die elektronische Steuereinrichtung (23) wenigstens zwei unabhängig voneinander Steuersignale für die Spannvorrichtung (17; 17') erzeugende Controller (21, 22) aufweist, dass jeder Controller (21, 22) mit einer Positionsmesseinrichtung (18) zur Erfassung wenigstens der unteren horizontalen Position des Werkstücktisches (10) verbunden ist und Mittel zur Verhinderung eines Lösens der Spannvorrichtung (17; 17') bei einer von der horizontalen Position des Werkstücktisches (10) innerhalb eines vorgebbaren Toleranzbereichs abweichenden Position besitzt, und dass die Spannvorrichtung (17; 17') eine ein Lösen der Spannelemente (29; 50) nur bei von allen Controllern (21, 22) simultan oder im wesentlichen simultan erzeugten Löse-Steuersignalen gestattende Sicherheitseinrichtung aufweist.

2. Werkstücktisch nach Anspruch 1, **dadurch gekennzeichnet, dass** die Positionsmesseinrichtung (18) eine Schwenkwinkel-Messeinrichtung ist.

3. Werkstücktisch nach Anspruch 1 oder 2, **dadurch gekennzeichnet, dass** die Controller (21, 22) ausgangsseitig mit einer die Sicherheitseinrichtung bildenden oder enthaltenden Ventilanordnung (24; 24') zur Steuerung der Fluidbeaufschlagung der Spannvorrichtung (17; 17') verbunden sind, wobei die Ventilanordnung (24; 24') wenigstens ein als Magnetventil ausgebildetes Ventil (25, 26) aufweist.

4. Werkstücktisch nach Anspruch 3, **dadurch gekennzeichnet, dass** das oder die fluidischen Spannelemente (29) als doppelwirkende Spannzylinder mit jeweils zwei Fluidkammern (28, 30) ausgebildet sind, dass ein durch einen ersten der Controller (21) steuerbares erstes Ventil (25) der Ventilanordnung (24) zur Druckbeaufschlagung und Druckentladung jeweils der einen Fluidkammer (28) und ein durch einen zweiten der Controller (22) steuerbares zweites Ventil (26) der Ventilanordnung (24) zur Druckbeaufschlagung und Druckentladung jeweils der anderen Fluidkammer (30) vorgesehen ist, und dass durch die Ventile (25, 26) nur bei korrekten Steuersignalen der Controller (21, 22) jeweils die eine Fluidkammer druckbeaufschlagt und die andere gleichzeitig druckentladen ist.

5. Werkstücktisch nach Anspruch 4, **dadurch gekennzeichnet, dass** die Spann-Steuersignale, bei denen durch Druckbeaufschlagung der jeweils zweiten Fluidkammer (30) durch das erste Ventil (26) der Spannzustand vorliegt oder hervorgerufen wird, Null-Signale sind, durch die sich die Ventile (25, 26) im stromlosen Schaltzustand befinden.

6. Werkstücktisch nach Anspruch 4 oder 5, **dadurch gekennzeichnet, dass** ein steuerbares Rückschlagventil in einer Zuleitung zur jeweils der zweiten Ventilkammer (30) angeordnet ist, das bei Druckbeaufschlagung der anderen Ventilkammer (28) öffnet.

7. Werkstücktisch nach Anspruch 3, **dadurch gekennzeichnet, dass** das oder die fluidischen Spannelemente (50) als einfachwirkende Spannzylinder mit mechanischen Rückstellmitteln (51) ausgebildet sind, dass ein Ventil (25) der Ventilanordnung (24') zur Druckbeaufschlagung und Druckentladung der gegen die Rückstellmittel (51) wirkenden Fluidkammern (28) der Spannzylinder ausgebildet ist, und dass beim Ventil (25) nur bei korrekt anliegenden Steuersignalen beider Controller (21, 22) der zur Druckbeaufschlagung der Fluidkammern (28) erforderliche Schaltzustand vorliegt.

8. Werkstücktisch nach Anspruch 7, **dadurch gekennzeichnet, dass** die zur Druckbeaufschlagung der Fluidkammern (28) und dadurch zum Lösen der Spannvorrichtung (50) erforderlichen, am Ventil (25) anliegenden Steuersignale der beiden Controller (21, 22) die zur Erregung des Magnetteils des Ventils erforderlichen Signalwerte aufweisen.

9. Werkstücktisch nach Anspruch 8, **dadurch gekennzeichnet, dass** diese Signalwerte der beiden Controller (21, 22) zur Steuerung von Schaltrelais (54, 55) ausgebildet sind, die in ihrem erregten Zustand das Magnetteil des Ventils (25) mit der erforderlichen Erregerspannung verbinden.

10. Werkstücktisch nach einem der Ansprüche 7 bis 9, **dadurch gekennzeichnet, dass** der Spannzustand der Spannvorrichtung (17') bei nicht erregtem Magnetteil des Ventils (25) und entsprechend druckentladenem Zustand der Fluidkammern (28) vorliegt.

11. Werkstücktisch nach einem der vorhergehenden Ansprüche, **dadurch gekennzeichnet, dass** wenigstens eine zu dem oder den Spannelementen (29; 50) führende Druckleitung mit einem Drucksensor (39, 40) verbunden ist, wobei wenigstens einer der Controller (21, 22) eine Drucküberwachungseinrichtung zur Überwachung der Drucksignale dieses Drucksensors (39, 40) aufweist.

12. Werkstücktisch nach Anspruch 11, **dadurch gekennzeichnet, dass** die Drucküberwachungseinrichtung zur Überwachung des Schaltzustands des mit der jeweiligen Druckleitung verbundenen Ventils (25, 26) ausgebildet ist.

13. Werkstücktisch nach einem der vorhergehenden Ansprüche, **dadurch gekennzeichnet, dass** wenigstens einer der Controller (21, 22) eine Fehlererkennungseinrichtung mit Mitteln zum Datenvergleich zwischen den Controllern (21, 22) besitzt, wobei Steuermittel zur Abschaltung der Bearbeitungsmaschine und/oder zur Erzeugung von optischen und/oder akustischen Warnsignalen und/oder zur Verhinderung des Öffnens der Zugangstür zum Arbeitsraum der Maschine bei einer Fehlererkennung vorgesehen sind.

14. Werkstücktisch nach Anspruch 13, **dadurch gekennzeichnet, dass** zur Ventilsteuerung jeweils erzeugte Steuersignale wenigstens eines der Controller (21, 22) am anderen Controller (22, 21) zur Überprüfung und Fehlererkennung anliegen.

15. Werkstücktisch nach einem der vorhergehenden Ansprüche, **dadurch gekennzeichnet, dass** die Positionsmesseinrichtung (18) zur Erfassung wenigstens der Position des Werkstücktisches (10) mindestens zwei Positionssensoren (19, 20) aufweist.

16. Werkstücktisch nach einem der vorhergehenden Ansprüche, **dadurch gekennzeichnet, dass** die Steuervorrichtung (23) Mittel zur Verhinderung einer Bewegung des Werkstücktisches (10) aus der unteren im wesentlichen horizontalen Position heraus bei gelöster Spannvorrichtung (17; 17') besitzt.

## Claims

1. Pivotable workbench for machining equipment, comprising a clamping device (17; 17') which has at least one fluid clamping element (29; 50) for detachably fixing workpieces (15) and/or workpiece pallets (16) to the workbench (10) and comprising an electronic control device (23) for controlling and monitoring the clamping device (17; 17'), **characterised in that** the electronic control means (23) has at least two controllers (21, 22) which generate independently of each other control signals for the clamping device (17; 17'), **in that** each controller (21, 22) is connected to a position measuring means (18) for detecting at least the lower horizontal position of the workbench (10) and has means for preventing detachment of the clamping device (17; 17') in a position which differs within a predeterminable tolerance range from the horizontal position of the workbench (10) and **in that** the clamping device (17; 17') has a safety means permitting detachment of the clamping elements (29; 50) only when detachment control signals are generated simultaneously or substantially simultaneously by all of the controllers (21, 22).

2. Workbench according to claim 1, **characterised in that** the position measuring means (18) is a pivot angle measuring means.

3. Workbench according to either claim 1 or claim 2, **characterised in that** the controllers (21, 22) are connected on their output side to a valve arrangement (24; 24'), forming or containing the safety means, for controlling the application of fluid to the clamping device (17; 17'), the valve arrangement (24; 24') having at least one valve (25, 26) configured as a solenoid valve.

4. Workbench according to claim 3, **characterised in that** the fluid clamping element or elements (29) are configured as double-acting clamping cylinders comprising two respective fluid chambers (28, 30), **in that** a first valve (25), controllable by a first of the controllers (21), of the valve arrangement (24) is provided for applying pressure to and removing pressure from one respective fluid chamber (28) and a second valve (26), controllable by a second of the controllers (22), of the valve arrangement (24) is provided for applying pressure to and removing pressure from the respective other fluid chamber (30) and **in that** the valves (25, 26) apply pressure to the one respective fluid chamber and at the same time remove pressure from the other fluid chamber only if the control signals from the controllers (21, 22) are correct.

5. Workbench according to claim 4, **characterised in that** the clamping control signals, at which the clamping state is provided or brought about as a result of the first valve (26) applying pressure to the respective second fluid chamber (30), are zero signals which place the valves (25, 26) in a currentless switching state.

6. Workbench according to either claim 4 or claim 5, **characterised in that** there is arranged in a feed line to the respective second valve chamber (30) a controllable check valve which opens on the application of pressure to the other valve chamber (28).

7. Workbench according to claim 3, **characterised in that** the fluid clamping element or elements (50) are configured as single-acting clamping cylinders having mechanical restoring means (51), **in that** a valve (25) of the valve arrangement (24') is configured for applying pressure to and removing pressure from the clamping cylinder fluid chambers (28) acting counter to the restoring means (51) and **in that**, in the case of the valve (25), the switching state required for applying pressure to the fluid chambers (28) is provided merely if the control signals from both controllers (21, 22) are applied correctly.

8. Workbench according to claim 7, **characterised in that** the control signals from the two controllers (21, 22) that are applied to the valve (25) and are required for applying pressure to the fluid chambers (28) and thus for detaching the clamping device (50) have the signal values required for exciting the magnetic portion of the valve.

9. Workbench according to claim 8, **characterised in that** these signal values from the two controllers (21, 22) are configured for controlling switching relays (54, 55) which, when excited, connect the magnetic portion of the valve (25) with the required excitation voltage.

10. Workbench according to any one of claims 7 to 9, **characterised in that** the clamping state of the clamping device (17') is provided when the magnetic portion of the valve (25) is not excited and pressure is accordingly removed from the fluid chambers (28).

11. Workbench according to any one of the preceding claims, **characterised in that** at least one pressure line leading to the clamping element or elements (29; 50) is connected to a pressure sensor (39, 40), at least one of the controllers (21, 22) having a pressure monitoring means for monitoring the pressure signals from this pressure sensor (39, 40).

12. Workbench according to claim 11, **characterised in that** the pressure monitoring means is configured for monitoring the switching state of the valve (25, 26) connected to each pressure line.

13. Workbench according to any one of the preceding claims, **characterised in that** at least one of the controllers (21, 22) has an error detection means comprising means for comparing data between the controllers (21, 22), control means being provided for deactivating the machining equipment and/or for producing visual and/or sound warning signals and/or for preventing opening of the access door to the work area of the equipment in the event of an error being detected.

14. Workbench according to claim 13, **characterised in that** for controlling the valves, respectively produced control signals from at least one of the controllers (21, 22) are applied to the other controller (22, 21) for monitoring and error detection.

15. Workbench according to any one of the preceding claims, **characterised in that** the position measuring means (18) for detecting at least the position of the workbench (10) has at least two position sensors (19, 20).

16. Workbench according to any one of the preceding claims, **characterised in that** the control device (23) has means for preventing the workbench (10) from moving out of the lower substantially horizontal position once the clamping device (17; 17') has become detached.

## Revendications

1. Table porte-pièces pivotante pour des machines d'usinage, comportant un dispositif de serrage (17 ; 17') muni d'au moins un élément de serrage (29 ; 50) fluidique pour la fixation amovible de pièces à usiner (15) et/ou de palettes de pièces (16) sur la table porte-pièces (10) et comportant un dispositif de commande (23) électronique pour commander et contrôler le dispositif de serrage (17 ; 17'), **caractérisée en ce que** le dispositif de commande (23) électronique comporte au moins deux contrôleurs (21, 22) générant indépendamment l'un de l'autre des signaux de commande pour le dispositif de serrage (17 ; 17'), **en ce que** chaque contrôleur (21, 22) est relié à un dispositif de mesure de position (18), destiné à détecter au moins la position inférieure horizontale de la table porte-pièces (10), et comporte des moyens pour empêcher un desserrage du dispositif de serrage (17 ; 17') en présence d'une position divergeant de la position horizontale de la table porte-pièces (10) à l'intérieur d'une plage de tolérances prédéfinissable, et **en ce que** le dispositif de serrage (17 ; 17') comporte un dispositif de protection permettant un desserrage des éléments de serrage (29 ; 50) uniquement en présence de signaux de commande de desserrage générés simultanément ou sensiblement simultanément par tous les contrôleurs (21, 22).

2. Table porte-pièces selon la revendication 1, **caractérisée en ce que** le dispositif de mesure de position (18) est un dispositif de mesure d'angles de pivotement.

3. Table porte-pièces selon la revendication 1 ou 2, **caractérisée en ce que** les contrôleurs (21, 22) sont reliés du côté sortie à un système de vannes (24 ; 24'), contenant ou formant le dispositif de protection et destiné à commander l'alimentation en fluide du dispositif de serrage (17 ; 17'), le système de vannes (24 ; 24') comportant au moins une vanne (25, 26) réalisée sous forme de vanne magnétique.

4. Table porte-pièces selon la revendication 3, **caractérisée en ce que** l'élément de serrage ou les éléments de serrage (29) fluidiques est/sont réalisé(s) sous forme de vérins de serrage comportant chacun deux chambres de fluide (28, 30), **en ce qu'**il est prévu une première vanne (25) du système de vannes (24), apte à être commandée par un premier contrôleur (21), pour pressuriser et décompresser respectivement l'une des chambres de fluide (28), et une deuxième vanne (26) du système de vannes (24), apte à être commandée par un deuxième contrôleur (22), pour pressuriser et décompresser respectivement l'autre chambre de fluide (30), et **en ce que**, uniquement en présence de signaux de commande corrects des contrôleurs (21, 22), respectivement une des chambres de fluide est pressurisée et l'autre est simultanément décompressée par l'intermédiaire des vannes (25, 26).

5. Table porte-pièces selon la revendication 4, **caractérisée en ce que** les signaux de commande de serrage, par lesquels la position de serrage existe ou est engendrée sous l'effet de la pressurisation de la deuxième chambre de fluide (30) par l'intermédiaire de la première vanne (26), sont des signaux nuls, par lesquels les vannes (25, 26) sont à l'état de commutation hors courant.

6. Table porte-pièces selon la revendication 4 ou 5, **caractérisée en ce qu'**un clapet anti-retour apte à être commandé est agencé dans une conduite d'admission respectivement vers la deuxième chambre de fluide (30), qui ouvre lorsque l'autre chambre de fluide (28) est pressurisée.

7. Table porte-pièces selon la revendication 3, **caractérisée en ce que** l'élément de serrage ou les éléments de serrage (29) fluidiques est/sont réalisé(s) sous forme de vérins à simple effet avec des moyens de rappel (51) mécaniques, **en ce qu'**une vanne (25) du système de vannes (24') est réalisée pour pressuriser et décompresser les chambres de fluide (28) du vérin de serrage, qui agissent à l'encontre des moyens de rappel (51), et **en ce que** l'état de commutation nécessaire pour pressuriser les chambres de fluide (28) existe sur la vanne (25) uniquement en présence de signaux de commande des deux contrôleurs (21, 22) appliqués correctement.

8. Table porte-pièces selon la revendication 7, **caractérisée en ce que** les signaux de commande des deux contrôleurs (21, 22) appliqués sur la vanne (25) pour la pressurisation des chambres de fluide (28) et, de ce fait, nécessaires pour le desserrage du dispositif de serrage (50), contiennent les valeurs de signaux nécessaires pour exciter la partie magnétique de la vanne.

9. Table porte-pièces selon la revendication 8, **caractérisée en ce que** ces valeurs de signaux des deux contrôleurs (21, 22) sont conçues pour commander des relais de commutation (54, 55) qui, dans leur état excité, relient la partie magnétique de la vanne (25) à la tension d'excitation nécessaire.

10. Table porte-pièces selon l'une quelconque des revendications 7 à 9, **caractérisée en ce que** le dispositif de serrage (17') est en position de serrage lorsque la partie magnétique de la vanne (25) est non excitée et, de manière correspondante, les chambres de fluide (28) sont à l'état décompressé.

11. Table porte-pièces selon l'une quelconque des revendications précédentes, **caractérisée en ce qu'**au moins une conduite de pression menant vers l'élément de serrage ou les éléments de serrage (29 ; 50) est reliée à un capteur de pression (39, 40), au moins l'un des contrôleurs (21, 22) comportant un dispositif de contrôle de pression pour contrôler les signaux de pression de ce capteur de pression (39, 40).

12. Table porte-pièces selon la revendication 11, **caractérisée en ce que** le dispositif de contrôle de pression est réalisé pour contrôler l'état de commutation de la vanne (25, 26) reliée à la conduite de pression respective.

13. Table porte-pièces selon l'une quelconque des revendications précédentes, **caractérisée en ce qu'**au moins un des contrôleurs (21, 22) comporte un dispositif de détection de dysfonctionnement avec des moyens pour la comparaison de données entre les contrôleurs (21, 22), sachant qu'il est prévu des moyens de commande pour déconnecter la machine d'usinage et/ou pour générer des signaux d'alarme optiques et/ou acoustique et/ou pour empêcher l'ouverture de la porte d'accès vers l'espace de travail de la machine dans le cas d'une détection de dysfonctionnement.

14. Table porte-pièces selon la revendication 13, **caractérisée en ce que** pour la commande des vannes, des signaux de commande générés dans chaque cas par au moins un des contrôleurs (21, 22) sont appliqués à l'autre contrôleur (21, 22) pour surveiller et détecter un dysfonctionnement.

15. Table porte-pièces selon l'une quelconque des revendications précédentes, **caractérisée en ce que** le dispositif de mesure de positionnement (18) pour détecter au moins la position de la table porte-pièces (10) comporte au moins deux capteurs de position (19, 20).

16. Table porte-pièces selon l'une quelconque des revendications précédentes, **caractérisée en ce que** le dispositif de commande (23) comporte des moyens destinés à empêcher un mouvement de la table porte-pièces (10) hors de la position inférieure sensiblement horizontale lorsque le dispositif de serrage (17 ; 17') est desserré.
